# EUROPÄISCHE PATENTSCHRIFT

(11) **EP 1 843 231 B1**
(45) Veröffentlichungstag und Bekanntmachung des Hinweises auf die Patenterteilung: **10.10.2012**
(21) Anmeldenummer: 07005734.4
(22) Anmeldetag: 21.03.2007
(51) Int. Cl.: G05B 19/409, G05B 19/042

(54) **Bedien-und Anzeigevorrichtung für ein Haushaltsgerät, Haushaltsgerät und System**
Operating and display device for a domestic appliance, domestic appliance and system
Dispositif de commande et d'affichage pour un appareil ménager, appareil ménager et système

(30) Priorität: 03.04.2006 DE 10615840
(43) Veröffentlichungstag der Anmeldung: 10.10.2007
(73) Patentinhaber: Miele & Cie. KG, 33332 Gütersloh (DE)
(72) Erfinder: Andert, Markus, 33602 Bielefeld (DE); Bevers, Svenja, 33758 Schloss-Holte Stukenbrock (DE); Löckmann, Manuela, 33415 Verl (DE); Neiss, Bernd-Udo, 33719 Bielefeld (DE); Nöller, Horst, 33332 Gütersloh (DE); Schütte, Thorsten, 33102 Paderborn (DE); Seyffarth, Silke, 33428 Harsewinkel (DE)

(56) Entgegenhaltungen:
- EP-A1- 0 740 112
- DE-U1- 29 615 963

## Beschreibung

Die Erfindung betrifft eine Bedien- und Anzeigevorrichtung für ein Haushaltgerät, umfassend eine Displayanzeige mit mehreren Feldern und eine Bedienhandhabe zur Auswahl von Betriebsprogrammen und/oder Parametern und/oder Anzeigeoptionen, wobei die Bedien- und Anzeigevorrichtung geeignet ist, Zustände und/oder Einstellungen von weiteren, mit dem Haushaltgerät in Kommunikationsverbindung stehenden Haushaltgeräten anzuzeigen. Die Erfindung betrifft ferner ein Haushaltgerät mit einer Bedien- und Anzeigevorrichtung, umfassend eine Displayanzeige mit mehreren Feldern und eine Bedienhandhabe zur Auswahl von Betriebsprogrammen und/oder Parametern und/oder Anzeigeoptionen, wobei die Bedien- und Anzeigevorrichtung geeignet ist, Zustände und/oder Einstellungen von weiteren, mit dem Haushaltgerät in Kommunikationsverbindung stehenden Haushaltgeräten anzuzeigen. Die Erfindung betrifft ferner ein System, bestehend aus einem ersten Haushaltgerät mit einer Bedien- und Anzeigevorrichtung, umfassend eine Displayanzeige mit mehreren Feldern und eine Bedienhandhabe zur Auswahl von Betriebsprogrammen und/oder Parametern und/oder Anzeigeoptionen und weiteren, mit dem ersten Haushaltgerät in Kommunikationsverbindung stehenden Haushaltgeräten, wobei die Bedien- und Anzeigevorrichtung geeignet ist, Zustände und/oder Einstellungen von den weiteren, mit dem ersten Haushaltgerät in Kommunikationsverbindung stehenden Haushaltgeräten anzuzeigen.

Aus der EP-0 740 112 A1 ist eine Bedien- und Anzeigevorrichtung mit einer Einstellungshandhabe und einem Bildschirm bekannt, die für die Bedienung von mehreren Haushaltgeräten, die miteinander in Kommunikationsverbindung stehen, bestimmt ist. Hierbei wird in einem ersten Schritt das zu bedienende Haushaltgerät ausgewählt, danach kann die Einstellung erfolgen. Jeder Einstellungsmöglichkeit ist eine korrespondierende Anzeige zugeordnet, wobei jede Einstellung entsprechend einer Anzeigeposition auf dem Bildschirm erfolgt. Die Bedien- und Anzeigevorrichtung kann in einem der miteinander in Kommunikationsverbindung stehenden Haushaltgeräte integriert sein.

Die DE 296 15 963 U1 offenbart eine Bedien- und Anzeigevorrichtung, die separat von den zu bedienenden Haushaltgeräten angebracht ist. Bei dieser Bedien- und Anzeigevorrichtung sind für jedes in Verbindung stehende Gerät jeweils gerätespezifische Anzeigeelemente zugeordnet.

Aus der WO 2004/052167 A1 ist eine Anzeigevorrichtung bekannt, die Zustandsdaten eines Haushaltgerätes, beispielsweise einer Geschirrspülmaschine, wie Restlaufzeit und/oder Programmstand darstellen kann. Die Anzeigevorrichtung ist separat von der Geschirrspülmaschine ausgeführt und von dieser entfernt betreibbar. Die Übertragung der Daten erfolgt über ein über das Haushalts-Stromversorgungsnetz betreibbares Datenübertragungssystem. Beim Betrieb von mehren Haushaltgeräten wird mittels einer Bedienhandhabe das Haushaltgerät ausgewählt, dessen Zustandsdaten auf der entfernten Anzeigevorrichtung ausgegeben bzw. angezeigt werden.

Aus der EP 0 898 003 A2 ist eine Bedien- und Anzeigevorrichtung für eine Waschmaschine bekannt, die eine Displayanzeige mit mehren Zeilen zur Anzeige von auswählbaren Programmen oder Programmparametern offenbart. Die Auswahl erfolgt über eine Bedienhandhabe, die mit der Darstellung bzw. mit Anzeigeelementen in der Display-Anzeige korrespondiert, wobei das ausgewählte Programm oder Parameter durch eine zusätzliche Eingabe, beispielsweise durch Drücken einer Enter-Taste, aktiviert wird. Die Displayanzeige ist besonders dazu geeignet, die auswählbaren Programme im Klartext darzustellen.

Aus dem bekannten Stand der Technik ist es somit bekannt, Einstellungen bzw. die Auswahl von Betriebsprogrammen und/oder Parametern für ein oder mehrere miteinander in Kommunikationsverbindung stehenden Haushaltgeräten mittels einer Bedien- und Anzeigevorrichtung vorzunehmen. Um eine Information über Zustände aller Haushaltgeräte zentral zu erhalten, ist eine zentral angeordnete Display-Anzeige bekannt, die die Zustände der angeschlossenen Haushaltgeräte anzeigt. Hierbei ist es notwendig, dass das zu beobachtende Haushaltgerät ausgewählt werden muss oder es erfolgt jeweils eine selbständige Anzeige, wenn sich ein Zustand in einem Haushaltgerät eingestellt hat, der eine Tätigkeit des Bedieners verlangt. Diese Art der Anzeige wird häufig als unübersichtlich bzw. die Auswahl des zu beobachtenden Haushaltgerätes wird als umständlich empfunden.

Der Erfindung liegt somit die Aufgabe zugrunde, die Anzeige von Zuständen und/oder Einstellungen von mehreren Haushaltgeräten in einer zentralen Anzeigevorrichtung zu verbessern.

Erfindungsgemäß wird dieses Problem durch eine Bedien- und Anzeigevorrichtung mit den Merkmalen des Patentanspruchs 1, mit einem Haushaltgerät mit den Merkmalen des Patentanspruchs 6 oder mit einem System mit den Merkmalen des Patentanspruchs 7 gelöst. Vorteilhafte Ausgestaltungen und Weiterbildungen der Erfindung ergeben sich aus den Unteransprüchen 2 bis 5.

Die mit der Erfindung erreichbaren Vorteile bestehen neben einer übersichtliche Darstellung von Zuständen oder Einstellung von mehreren in Kommunikationsverbindung stehenden Haushaltgeräten darin, dass detaillierte Informationen über Zustände und/oder Einstellungen anzeigbar sind. Hierzu wird eine Bedien- und Anzeigevorrichtung bereitgestellt, die eine Displayanzeige mit mehreren Feldern bzw. Anzeigebereichen und eine Bedienhandhabe zur Auswahl von Betriebsprogrammen und/oder Parametern und/oder Anzeigeoptionen umfasst. Die Displayanzeige umfasst zumindest einen Anzeigebereich, in dem Zustände und/oder Einstellungen von den Haushaltgeräten als eine zusammengefasste Information anzeigbar sind. Diese zusammengefasste Anzeige hat den Vorteil, dass der Bediener jederzeit auf das Vorhandensein von relevanten Zuständen aufmerksam gemacht wird.

Hierbei ist es zweckmäßig, dass die Bedien- und Anzeigevorrichtung in einem ersten Haushaltgerät integriert ist und zur Bedienung und Anzeige von Zuständen und/oder Einstellungen des ersten Haushaltgerätes vorgesehen ist, wobei die Bedien- und Anzeigevorrichtung mit weiteren, entfernt angeordneten Haushaltgeräten in Kommunikationsverbindung steht. Bei einer Integration in einem Backofen oder Herd ist es möglich, dass entfernte oder schlecht erreichbare Haushaltgeräte auf bequeme Art und Weise hinsichtlich ihres Betriebszustandes oder ihrer Einstellung beobachtet werden können.

In einer weiteren Ausführung werden die Zustände und/oder Einstellungen der entfernten Haushaltgeräte in der Art einer logischen ODER-Veknüpfung zusammengefasst, wobei sie unabhängig vom Zustand bzw. der Einstellung des ersten Haushaltgerätes, beispielsweise Backofen, in einem separaten Anzeigebereich als zusammengefasste Information anzeigbar sind. Hierdurch ist der Bediener jederzeit über die Zustände der entfernten, nicht in unmittelbaren Einblick stehenden Haushaltgeräten, informiert, wobei die zusammengefasste Information nur das Vorhandensein von relevanten Zuständen bzw. Einstellungen angibt. Wenn alle entfernten Haushaltgeräte ausgeschaltet bzw. in einem nicht relevanten Zustand (Stand By) sind, ergibt die logische ODER-Verknüpfung als Ergebnis einen inaktiven Zustand, der als Information ausgegeben wird. Im Falle dass ein oder mehrere entfernte Haushaltgeräte eingeschaltet sind oder sich in einem relevanten Zustand befinden, ergibt die logische ODER-Verknüpfung als Ergebnis einen aktiven Zustand, der als Information ausgegeben wird. Der separate Anzeigebereich bzw. das Feld ist nicht für die Bedienung oder Anzeige des zu bedienenden Haushaltgerätes vorgesehen, so dass die Bedienung vom separaten Anzeigebereich oder Anzeigefeld bzw. von der Informationsausgabe über das separate Anzeigefeld unbeeinflusst bleibt.

In einer vorteilhaften Ausführung ist das separate Feld über die Bedienungshandhabe auswählbar, wodurch als Anzeigeoption anstelle der Anzeige der Betriebsprogramme und/oder Parameter des ersten Haushaltgerätes die Zustände der entfernten Haushaltgeräte in einem jeweils separaten Anzeigefeld bzw. Bereich darstellbar sind. Hierbei wird beispielsweise für jedes Haushaltgerät jeweils eine Zeile bereitgehalten, in welcher der Zustand des der jeweiligen Zeile zugeordneten Haushaltgerätes anzeigbar ist. Die Ausgabe der Information kann im Klartext erfolgen, wodurch dem Benutzer ein Nachlesen in der Bedienungsanleitung erspart wird. Hierbei ist insbesondere eine mehrzeilige Displayanzeige geeignet, auf der die Zustände mehrerer Hausgeräte gleichzeitig darstellbar sind. Wenn die Displayanzeige weniger Zeilen, als zu überwachende Haushaltgeräte enthält, können nichtsichtbare Zeilen über eine sogenannte Scroll-Funktion in den sichtbaren Anzeigebereich bewegt werden. Mit dieser Maßnahme ist es möglich, eine bereits bekannte Displayanzeige mit beispielsweise 5 Zeilen für die detaillierte Zustandsanzeige von mehr als 5 Haushaltgeräten zu verwenden, wobei für jedes Haushaltgerät jeweils eine Zeile vorgesehen ist. Die detaillierte Anzeige der einzelnen Haushaltgeräte ist durch die Bedienungshandhabe wieder abschaltbar. Danach ist die Displayanzeige wieder funktional dem ersten Haushaltgerät zugeordnet und die Zustände der entfernten Haushaltgeräte sind wieder in einem separaten Anzeigebereich bzw. in einem Anzeigefeld in der Displayanzeige als zusammengefasste Information anzeigbar. Die Handhabung der Auswahl hinsichtlich der Anzeigeoption entspricht im Wesentlichen der Bedienphilosophie des der Bedien- und Anzeigevorrichtung zugeordneten Haushaltgerätes. Damit wird dem Benutzer die Einstellung der Anzeigeoptionen auf einfache Art und Weise bereitgestellt.

In einer vorteilhaften Weiterbildung ist es vorgesehen, dass der Zustand des ersten Haushaltgerätes in einem separaten Anzeigefeld mit den jeweiligen Anzeigefeldern innerhalb der Displayanzeige für die entfernten Haushaltgeräte gleichzeitig anzeigbar ist. Somit kann das Haushaltgerät, welches die Bedien- und Anzeigevorrichtung enthält, gleichzeitig mit den entfernten Haushaltgeräten hinsichtlich seines Zustandes überwacht werden.

Ein Ausführungsbeispiel der Erfindung ist in den Zeichnungen rein schematisch dargestellt und wird nachfolgend näher beschrieben. Es zeigt
- Fig. 1: ein System mit in Kommunikationsverbindung stehenden Haushaltgeräten;
- Fig. 2a - 2d: eine Bedien- und Anzeigevorrichtung;
- Fig. 3a - 3b: eine Bedien- und Anzeigevorrichtung in einem anderen Zustand und
- Fig. 4: schematisch die Funktionsweise der Sammelmeldung.

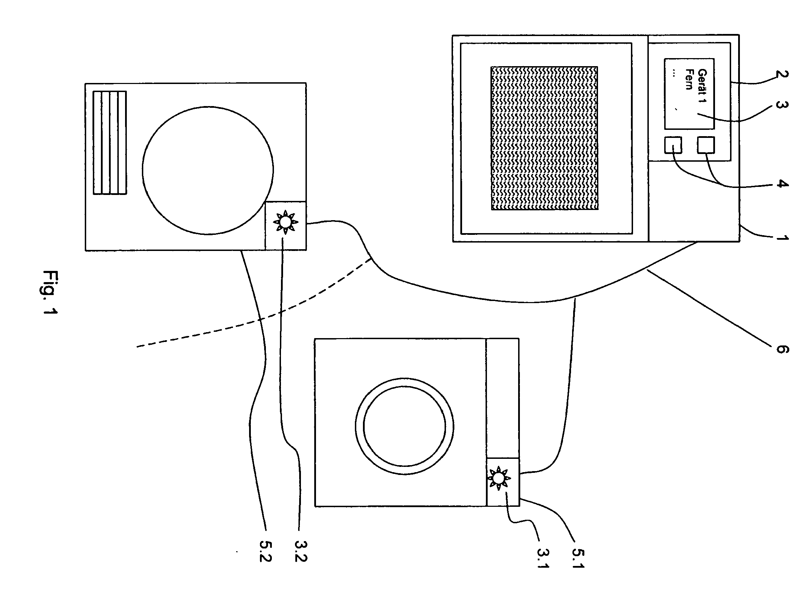

Gemäß Fig. 1 ist ein Haushaltgerät 1 über eine Kommunikationsverbindung 6 mit weiteren, entfernt angeordneten Haushaltgeräten 5.1 und 5.2 datentechnisch verbunden. Als Kommunikationsverbindung sind drahtlose, drahtgebundene Datenübertragungssysteme bzw. Bussysteme oder das Powerline bekannte Datenübertragungssystem, welches eine Datenübertragung über das Stromversorgungsnetz im Haus bereitstellt, verwendbar. Das erste Haushaltgerät 1 ist beispielsweise ein Backofen, der in der Küche für den Benutzer gut zugänglich aufgestellt bzw. eingebaut ist. Die Bedien- und Anzeigevorrichtung 2 ist gut zugänglich und für den Benutzer gut einsehbar. Als entferntes Haushaltgerät ist beispielsweise eine Waschmaschine 5.1 und ein Trockner 5.2 denkbar, die in einem anderen Raum, beispielsweise Keller, aufgestellt sind. Das entfernte Haushaltgeräte bzw. die Waschmaschine 5.1 besitzt die Bedien- und Anzeigevorrichtung 3.1, der Trockner 5.2 die Bedien- und Anzeigevorrichtung 3.2. Über die Bedien- und Anzeigevorrichtung 3.1 sind Waschprogramme und/oder Parameter für den durchzuführenden Waschprozess in der Waschmaschine 5.1 einstellbar. Über die Bedien- und Anzeigevorrichtung 3.2 sind Trockenprogramme und/oder Parameter für den durchzuführenden Trocknungsprozess im Trockner 5.2 einstellbar. Über die Kommunikationsverbindung 6 können Zustände oder Einstellungen, wie beispielsweise ausgewähltes Programm und/oder Parameter der Waschmaschine 5.1 und/oder des Trockners 5.2 in kodierter Form zum ersten Haushaltgerät 1 übermittelt werden. Dies wird jeweils durch Vorrichtungen innerhalb der Geräte 1, 5.1, 5.2 bereitgestellt, beispielsweise sogenannte Interfaces. Der als erstes Haushaltgerät fungierende Backofen 1 umfasst eine Bedien- und Anzeigevorrichtung 2 mit einer Displayanzeige 3, die die Darstellung von mehreren Zeilen bzw. Feldern 7. Bis 7.4 bereitstellt.

Die Funktion des ersten Haushaltgerätes 1 ist für die erfindungsgemäße Bedien- und Anzeigevorrichtung 2 nicht entscheidend. Es kann auch ein Geschirrspüler oder ein Mikrowellen-Gargerät als erstes Haushaltgerät 1 vorgesehen werden. Wichtig ist nur, dass die Bedien- und Anzeigevorrichtung 2 übersichtlich und/oder gut einsehbar angeordnet ist. Dies ist in der Regel der Fall, wenn die Bedien- und Anzeigevorrichtung 2 in bequemer Arbeitshöhe in der Küche angeordnet ist.

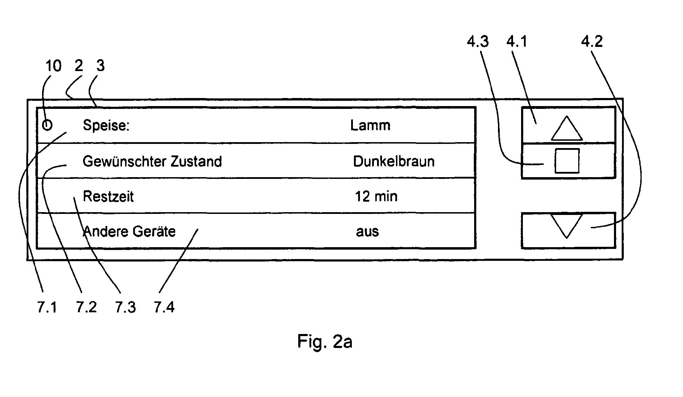

In Fig. 2a ist beispielsweise die Bedien- und Anzeigevorrichtung 2 des Backofens 1 dargestellt, welche eine Displayanzeige 3 und zumindest eine Bedienhandhabe 4 umfasst, die in Verbindung mit der Displayanzeige 3 eine Programm- und/oder Parameterauswahl bereitstellt. Über die Pfeiltasten 4.1, 4.2 der Bedienhandhabe 4 wird entsprechend eine Anzeige bzw. Klartextausgabe durch Hervorhebung, beispielsweise helle Umrandung, ausgewählt und durch anschließendes Drücken der Eingabetaste 4.3 als Einstellung und/oder Parameter für die Programmsteuerung übernommen. Das Feld 7.1 gibt die zu garende Speise an, das Feld 7.2 zeigt als zusätzliche Einstellung an, dass als Garergebnis "dunkelbraun" gewünscht wird. Das Feld 7.3 steht mit der Programmsteuerung in Verbindung und zeigt den aktuellen Zustand an bzw. in diesem Beispiel die noch verbleibende Restzeit, beispielsweise in Minuten, für den laufenden Garprozess. Das Feld 7.4 ist für die Anzeige einer zusammengefassten Information für entfernte Haushaltgeräte 5.1, 5.2 als Anzeigebereich vorgesehen. Gemäß Fig. 2a sind keine entfernten Haushaltgeräte eingeschaltet oder in Betrieb, so dass als zusammengefasste Information "Andere Geräte aus" angezeigt wird.

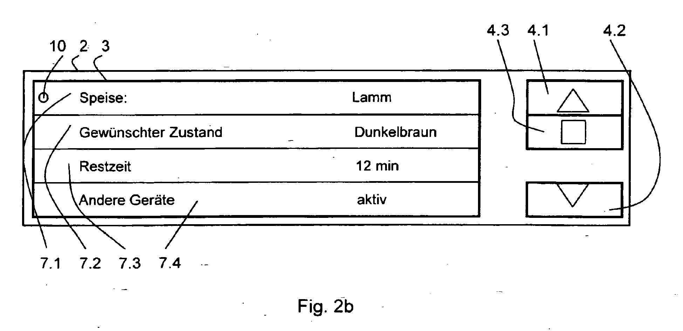

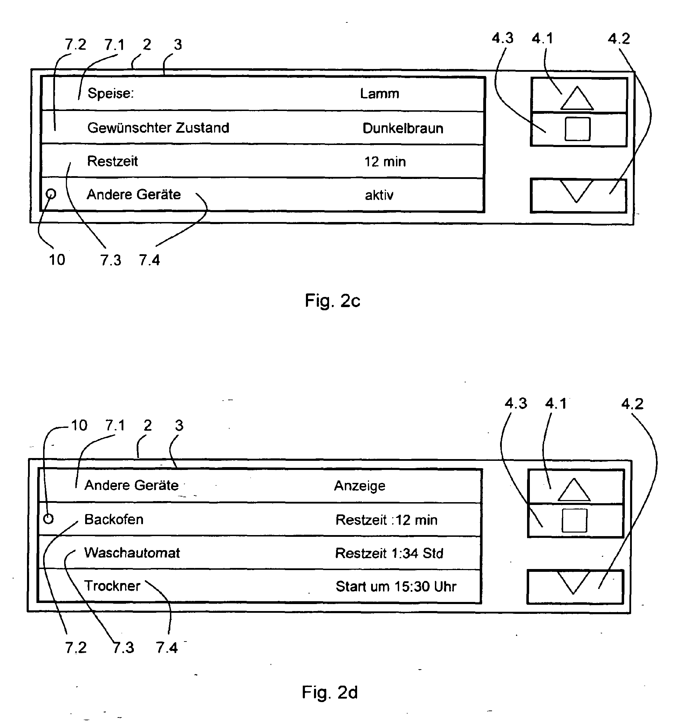

In Fig. 2b ist der Backofen 1 eingeschaltet, die Felder 7.1 und 7.2 zeigen die Programm- bzw. Parametereinstellung an, das Feld 7.3 zeigt die Restzeit für den Garprozess an. Das Feld 7.4 zeigt als zusammengefasste Information "Andere Geräte aktiv" an, wenn ein oder mehrere entfernte Geräte 5.1, 5.2 eingeschaltet bzw. in Betrieb sind. Über die Taste 4.2 kann der Cursor 10 bewegt werden, um beispielsweise Parameter im Feld 7.2 zur Auswahl bereitzustellen. Gemäß Fig. 2c ist der Cursor 10 auf das Feld 7.4 bewegt worden. Durch anschließendes Drücken der Eingabetaste 4.3 wird das Feld 7.4 ausgewählt bzw. aktiviert. Hierbei erfolgt eine Umgestaltung der Displayanzeige 3, so dass gemäß Fig. 2d der Zustand jedes einzelnen Gerätes in allgemeiner Form dargestellt wird. In dieser Anzeigeauswahl ist für jedes der mit dem ersten Haushaltgerät 1 in Verbindung stehenden Haushaltgeräte 5.1, 5.2 jeweils ein separates Anzeigefeld, in diesem Beispiel eine Zeile, vorgesehen. Im gezeigten Beispiel ist das Feld 7.2 für den Backofen 1 reserviert, in dem hier nur die Anzeige des Zustandes, hier Restzeit für den laufenden Garprozess, dargestellt wird. Das Feld 7.3 ist für die Anzeige eines entfernten Haushaltgerätes, hier die Waschmaschine 5.1 reserviert. In diesem Beispiel ist das Programm der Waschmaschine gestartet, wobei als Zustand die noch verbleibende Restlaufzeit angezeigt wird. Das Feld 7.4 ist für ein weiteres entferntes Haushaltgerät reserviert, in diesem Beispiel ist das der Trockner 5.2, der mittels Startvorwahl in einen Wartezustand versetzt worden ist. Als Zustand wird die Startzeit für den Beginn des Trocknungsprogramms auf dem Feld 7.4 ausgegeben. Der Cursor verbleibt im Feld 7.2, welches für den Backofen 1, also das erste Haushaltgerät vorgesehen ist. Durch erneuten Druck auf die Eingabetaste 4.3 wird die Displayanzeige 3 entsprechend Fig. 2c zurückgeschaltet, so dass die Zustände und/ oder Einstellungen des ersten Haushaltgerätes 1 in den Feldern 7.1, 7.2 und 7.3 angezeigt werden. Die Zustände der entfernten Haushaltgeräte 5.1, 5.2 werden wieder als zusammengefasste Meldung im Feld 7.4 angezeigt. Das Feld 7.4 zeigt somit nur an, ob überhaupt ein entferntes Haushaltgerät 5.1, 5.2 in Betrieb ist.

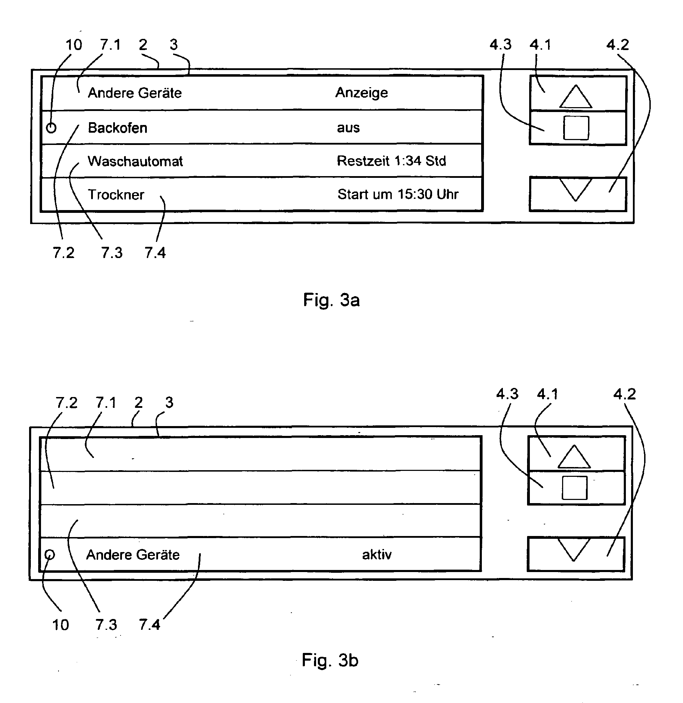

In Fig. 3b ist der Fall dargestellt, in dem der Backofen 1 nicht in Betrieb ist, jedoch die entfernten Haushaltgeräte, also die Waschmaschine 5.1 und der Trockner 5.2. In diesem Fall kann die Displayanzeige 3 des ersten, inaktiven Haushaltgerätes durch eine Betätigung der Bedienhandhabe 4 aktiviert werden. Der Cursor kann, wie bereits oben beschrieben, mit den Tasten 4.1 oder 4.2 zum Feld 7.4 bewegt werden, welches die zusammengefasste Information für die Zustände der entfernten Haushaltgeräte 5.1, 5.2 vorgesehen ist. Durch Drücken der Eingabetaste 4.3 wird die Displayanzeige 3 umgeschaltet, so dass gemäß Fig. 3a der Zustand jedes einzelnen Gerätes in allgemeiner Form dargestellt wird. In dieser Anzeigeauswahl ist für jedes der mit dem ersten Haushaltgerät 1 in Verbindung stehenden Haushaltgeräte 5.1, 5.2 jeweils ein separates Anzeigefeld, in diesem Beispiel eine Zeile, vorgesehen. Als Zustand für das erste Haushaltgerät 1 wird im Feld 7.2 "Backofen aus" angezeigt. In den Feldern 7.3 und 7.4 werden die Zustände der entfernten Haushaltgeräte 5.1 und 5.2 angezeigt, wie es bereits in Fig. 2d dargestellt und entsprechend beschrieben ist. Der Cursor 10 bleibt als Auswahlkennzeichen dem ersten Haushaltgerät, welches in der Displayanzeige 3 als "Backofen" bezeichnet ist, fest zugeordnet, obwohl dieser ausgeschaltet ist. Durch Drücken der Eingabetaste 4.3 wird die Displayanzeige 3 für die Anzeige des Zustandes und/oder Einstellungen des ersten Haushaltgerätes 1 zurückgeschaltet. Danach stellt sich die Situation gemäß Fig. 3b ein. Da das erste Haushaltgerät ausgeschaltet ist, sind entsprechend Fig. 3b alle hierfür vorgesehenen Felder 7.1 bis 7.3 verdunkelt bzw. ausgeschaltet. Nur das Feld 7.4 welches die zusammengefasste Information für die Zustände und/oder Einstellungen der entfernten Haushaltgeräte anzeigt, bleibt an bzw. aktiv.

In einer zweckmäßigen Ausführung erlischt nach einer gewissen Verzögerungszeit auch diese Anzeige 7.4. Erst beim aktivieren der Bedienhandhabe 4 oder bei einer Zustandsänderung im Programmablauf eines entfernten Haushaltgerätes wird die Displayanzeige 3 mit dem Feld 7.4 aktiviert.

In weiteren Ausführungen ist die Bedienhandhabe als Drehknopf ausgeführt, mittels welcher der Cursor bewegt werden kann. Die Auswahl für die gewählte Anzeigeoption erfolgt über einen Taster, der im Drehknopf angeordnet ist oder durch Druck auf den Drehknopf. Als Bedienhandhabe kann auch ein sogenannter Berührbildschirm verwendet werden, bei dem durch Berührung des Feldes die dem jeweiligen Feld zugeordnete Einstellung durch die Steuerung übernommen oder die dem Feld zugeordnete Funktion ausgeführt wird. Bezogen auf Fig. 2c würde eine Berührung des Feldes 7.4 mit der zusammengefasste Information für die entfernten Haushaltgeräte 5.1, 5.1 dazu führen, dass die Umschaltung der Displayanzeige entsprechend Fig. 2d erfolgt. Danach ist für jedes entfernte Haushaltgerät 5.1, 5.2 jeweils ein eigenes Anzeigefeld 7.3 und 7.4 vorgesehen. Die aufgezeigte Displayanzeige mit vier Zeilen ist hier nur beispielhaft genannt, es können auch Displayanzeigen mit 5 oder mehr Zeilen verwendet werden. Bei der Verwendung von mehr entfernten Haushaltgeräten, als Felder oder Zeilen in der Displayanzeige 3 anzeigbar sind, wird eine sogenannte Scroll-Funktion aktiviert. Beispielsweise bei der Verwendung von vier entfernten Haushaltgeräten würden bei der Anzeigeoption gemäß Fig. 2d oder 3a zwei Haushaltgeräte hinsichtlich ihres jeweiligen Zustands und/oder Einstellung nicht angezeigt. Durch Drücken der Pfeiltaste 4.2 würde die Anzeige aus dem Feld 7.4 in das Feld 7.3 übertragen, wobei in das Feld 7.4 die Anzeige für das vorher nicht angezeigte entfernte Haushaltgerät erfolgen würde. Beim Drücken der Pfeiltaste 4.1 würde der ursprüngliche Inhalt bzw. Klartextausgabe von Feld 7.3 in das Feld 7.4 übertragen werden. In das Feld 7.3 würde wieder die ursprüngliche Anzeige für das erste entfernte Haushaltgerät erscheinen. Somit braucht die Displayanzeige 3 hinsichtlich der Anzahl an Zeilen bzw. Feldern 7. 1 bis 7.4 nicht auf die zu verwendende Anzahl von anzuzeigenden entfernten Haushaltgeräten 5.1, 5.2 angepasst werden.

Als entfernte Haushaltgeräte 5.1, 5.2 sind auch Kühl- und/oder Gefriergeräte denkbar. Hierbei kann als Zustand nur unerwünschte Fehler, beispielsweise unzulässiger Temperaturbereich oder eine nicht richtig geschlossene Tür zu einer Zustandsmeldung führen. Es können auch Zustandsmeldungen hinsichtlich ihrer Relevanz unterschiedlich dargestellt werden, so dass beispielsweise unerwünschte Fehler, mit akustischen Signalen untermalt werden, um die Aufmerksamkeit einer Bedienperson zu erhöhen. Auch Änderungen von Zuständen in den entfernten Geräten 5.1, 5.2 können auf diese Weise dargestellt oder bekannt gemacht werden. In zweckmäßiger Weise würde der normale, fehlerfreie Betrieb eines Kühl- oder Gefriergerätes nicht als "Aktiv"-Zustand auf das Feld 7.4 mit der Sammelmeldung 11 wirken. Somit bleibt die Sammelmeldung 11 in erster Linie nur den zeitweise aktivierten Haushaltgeräten, wie beispielsweise Waschmaschine, Spülmaschine, Geschirrspüler vorbehalten.

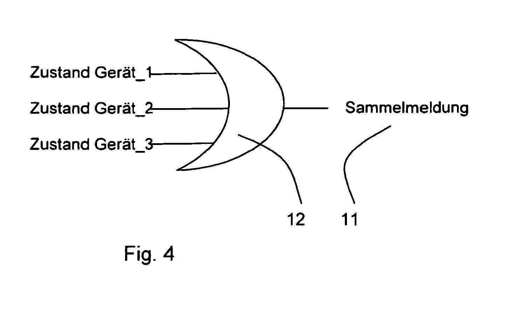

In Fig. 4 ist beispielhaft aufskizziert, wie die zusammengefasste Information gebildet wird. Über eine logische ODER-Verknüpfung 12 werden die einzelnen Zustandsanzeigen zu einer einzigen Sammelmeldung 11 verknüpft. Die Sammelmeldung 11 bzw. die zusammengefasste Information gibt an, ob ein oder mehrere Zustände von entfernten Geräten anzuzeigen sind. Das bedeutet, ein aktiver Zustand für Gerät_1 und inaktive Zustände für Gerät_2 und Gerät_3 ergibt eine aktive Sammelmeldung 11. Auch ein aktiver oder anzuzeigender Zustand für Gerät_2 oder Gerät_3 ergibt eine aktive Sammelmeldung. Nur wenn jedes Gerät, also Gerät_1, Gerät_2, und Gerät_3 jeweils einen inaktiven Zustand meldet bzw. hat, wird als Ergebnis der ODER-Verknüpfung 12 eine inaktive Sammelmeldung 11 ausgegeben.

## Patentansprüche

1. Bedien- und Anzeigevorrichtung (2) für ein Haushaltgerät (1), umfassend eine Displayanzeige (3) mit mehreren Feldern (7.1, 7.2, 7.3, 7.4) und eine Bedienhandhabe (4) zur Auswahl von Betriebsprogrammen und/oder Parametern und/oder Anzeigeoptionen, wobei die Bedien- und Anzeigevorrichtung (2) geeignet ist, Zustände und/oder Einstellungen von weiteren, mit dem Haushaltgerät (1) in Kommunikationsverbindung stehenden Haushaltgeräten (5.1, 5.2) anzuzeigen,
**dadurch gekennzeichnet,**
**dass** die Displayanzeige (3) ein Feld (7.4) als Anzeigebereich umfasst, in dem Zustände und/oder Einstellungen von den weiteren Haushaltgeräten (5.1, 5.2) als eine zusammengefasste Information (11) anzeigbar sind.

2. Bedien- und Anzeigevorrichtung (2) für ein Haushaltgerät (1) nach Anspruch 1,
**dadurch gekennzeichnet,**
**dass** die Bedien- und Anzeigevorrichtung (2) in einem ersten Haushaltgerät (1) integriert ist und zur Bedienung und Anzeige von Zuständen und/oder Einstellungen des ersten Haushaltgerätes (1) vorgesehen ist, wobei die Bedien- und Anzeigevorrichtung (2) mit weiteren, entfernt angeordneten Haushaltgeräten (5.1, 5.2) in Kommunikationsverbindung (6) steht.

3. Bedien- und Anzeigevorrichtung (2) für ein Haushaltgerät (1) nach Anspruch 2,
**dadurch gekennzeichnet,**
**dass** die Zustände und/oder Einstellungen der entfernten Haushaltgeräte 5.1, 5.2) in der Art einer logischen ODER-Veknüpfung (12) zusammengefasst und unabhängig vom Zustand des ersten Haushaltgerätes (1) in einem separaten Anzeigebereich (7.4) als zusammengefasste Information oder Sammelmeldung (11) anzeigbar sind.

4. Bedien- und Anzeigevorrichtung (2) für ein Haushaltgerät (1) nach Anspruch 3,
**dadurch gekennzeichnet,**
**dass** das separate Feld (7.4) über eine Bedienungshandhabe (4) auswählbar ist, wodurch als Anzeigeoption anstelle der Anzeige der Betriebsprogramme und/oder Parameter des ersten Haushaltgerätes die Zustände der entfernten Haushaltgeräte (5.1, 5.2) in einem jeweils separaten Anzeigefeld (7.3, 7.4) darstellbar sind.

5. Bedien- und Anzeigevorrichtung (2) für ein Haushaltgerät (1) nach Anspruch 4,
**dadurch gekennzeichnet,**
**dass** der Zustand des ersten Haushaltgerätes (1) in einem separatem Anzeigefeld (7.2) mit den jeweiligen Anzeigefeldern (7.3, 7.4) für die entfernten Haushaltgeräte (5.1, 5.2) gleichzeitig anzeigbar ist.

6. Haushaltgerät (1) mit einer Bedien- und Anzeigevorrichtung (2), umfassend eine Displayanzeige (3) mit mehreren Feldern (7.1, 7.2, 7.3, 7.4) und eine Bedienhandhabe (4) zur Auswahl von Betriebsprogrammen und/oder Parametern und/oder Anzeigeoptionen, wobei die Bedien- und Anzeigevorrichtung (2) geeignet ist, Zustände und/oder Einstellungen von weiteren, mit dem Haushaltgerät in Kommunikationsverbindung (6) stehenden Haushaltgeräten (5.1, 5.2) anzuzeigen,
**dadurch gekennzeichnet,**
**dass** die Displayanzeige (3) ein Feld (7.4) als Anzeigebereich umfasst, in dem Zustände und/oder Einstellungen von den weiteren Haushaltgeräten (5.1, 5.2) als eine zusammengefasste Information (11) anzeigbar sind.

7. System, bestehend aus einem ersten Haushaltgerät (1) mit einer Bedien- und Anzeigevorrichtung (2), umfassend eine Displayanzeige (3) mit mehreren Feldern (7.1, 7.2, 7.3, 7.4) und eine Bedienhandhabe (4) zur Auswahl von Betriebsprogrammen und/oder Parametern und/oder Anzeigeoptionen und weiteren, mit dem ersten Haushaltgerät (1) in Kommunikationsverbindung (6) stehenden Haushaltgeräten (5.1, 5.2), wobei die Bedien- und Anzeigevorrichtung (2) geeignet ist, Zustände und/oder Einstellungen der weiteren, mit dem ersten Haushaltgerät (1) in Kommunikationsverbindung (6) stehenden Haushaltgeräte (5.1, 5.2) anzuzeigen,
**dadurch gekennzeichnet,**
**dass** die Displayanzeige (3) ein Feld (7.4) als Anzeigebereich umfasst, in dem Zustände und/oder Einstellungen von den weiteren Haushaltgeräten (5.1, 5.2) als eine zusammengefasste Information (11) anzeigbar sind.

## Claims

1. Control and display device (2) for a household appliance (1), comprising a display (3) which comprises a plurality of fields (7.1, 7.2, 7.3, 7.4) and a control means (4) for selecting operating programs and/or parameters and/or display options, the control and display device (2) being capable of displaying states and/or settings of further household appliances (5.1, 5.2) which are connected so as to communicate with the household appliance (1),
**characterised in that**
the display (3) comprises a field (7.4) as a display region, in which states and/or settings of the further household appliances (5.1, 5.2) can be displayed as a summarised piece of information (11).

2. Control and display device (2) for a household appliance (1) according to claim 1,
**characterised in that**
the control and display device (2) is integrated in a first household appliance (1) and is provided for controlling and displaying states and/or settings of the first household appliance (1), the control and display device (2) being connected (6) so as to communicate with further, remotely arranged household appliances (5.1, 5.2).

3. Control and display device (2) for a household appliance (1) according to claim 2,
**characterised in that**
the states and/or settings of the remote household appliances (5.1, 5.2) are combined in the manner of a logical OR operation (12) and can be displayed in a separate display region (7.4) as a summarised piece of information or a collective message (11), independently of the state of the first household appliance (1).

4. Control and display device (2) for a household appliance (1) according to claim 3,
**characterised in that**
the separate field (7.4) can be selected via a control means (4), whereby the states of the remote household appliances (5.1, 5.2) can each be shown in a separate display field (7.3, 7.4) as a display option instead of displaying the operating programs and/or parameters of the first household appliance.

5. Control and display device (2) for a household appliance (1) according to claim 4,
**characterised in that**
the state of the first household appliance (1) can be displayed in a separate display field (7.2), simultaneously with the respective display fields (7.3, 7.4) for the remote household appliances (5.1, 5.2).

6. Household appliance (1) comprising a control and display device (2) which comprises a display (3) having a plurality of fields (7.1, 7.2, 7.3, 7.4) and a control means (4) for selecting operating programs and/or parameters and/or display options, the control and display device (2) being capable of displaying states and/or settings of further household appliances (5.1, 5.2) which are connected (6) so as to communicate with the household appliance,
**characterised in that**
the display (3) comprises a field (7.4) as a display region, in which states and/or settings of the further household appliances (5.1, 5.2) can be displayed as a piece of summarised information (11).

7. System consisting of a household appliance (1) comprising a control and display device (2) which comprises a display (3) having a plurality of fields (7.1, 7.2, 7.3, 7.4) and a control means (4) for selecting operating programs and/or parameters and/or display options and further household appliances (5.1, 5.2) which are connected (6) so as to communicate with the household appliance (1), the control and display device (2) being capable of displaying states and/or settings of the further household appliances (5.1, 5.2) which are connected (6) so as to communicate with the first household appliance (1),
**characterised in that**
the display (3) comprises a field (7.4) as a display region, in which states and/or settings of the further household appliances (5.1, 5.2) can be displayed as a piece of summarised information (11).

## Revendications

1. Dispositif de commande et d'affichage (2) pour un appareil électroménager (1), comprenant un afficheur (3) avec plusieurs champs (7.1, 7.2, 7.3, 7.4) et un moyen de commande (4) pour la sélection de programmes de fonctionnement et/ou de paramètres et/ou d'options d'affichage, le dispositif de commande et d'affichage (2) étant adapté pour afficher des états et/ou des réglages d'autres appareils électroménagers (5.1, 5.2) en liaison de communication avec l'appareil électroménager (1),
**caractérisé en ce que**
l'afficheur (3) comprend un champ (7.4) en tant que zone d'affichage dans lequel peuvent être affichés des états et/ou des réglages des autres appareils électroménagers (5.1, 5.2) en tant qu'information (11) résumée.

2. Dispositif de commande et d'affichage (2) pour un appareil électroménager (1) selon la revendication 1,
**caractérisé en ce que**
le dispositif de commande et d'affichage (2) est intégré dans un premier appareil électroménager (1) et est prévu pour la commande et l'affichage d'états et/ou de réglages du premier appareil électroménager (1), le dispositif de commande et d'affichage (2) étant en liaison de communication (6) avec d'autres appareils électroménagers (5.1, 5.2) disposés à distance.

3. Dispositif de commande et d'affichage (2) pour un appareil électroménager (1) selon la revendication 2,
**caractérisé en ce que**
les états et/ou les réglages des appareils électroménagers (5.1, 5.2) distants sont réunis à la façon d'une fonction OU logique (12) et peuvent être affichés en tant qu'information résumée ou message collectif (11) indépendamment de l'état du premier appareil électroménager (1) dans une zone d'affichage (7.4) séparée.

4. Dispositif de commande et d'affichage (2) pour un appareil électroménager (1) selon la revendication 3,
**caractérisé en ce que**
le champ séparé (7.4) peut être sélectionné par biais d'un moyen de commande (4), les états des appareils électroménagers (5.1, 5.2) distants pouvant de ce fait être représentés dans respectivement un champ d'affichage (7.3, 7.4) séparé en tant qu'option d'affichage à la place de l'affichage des programmes de fonctionnement et/ou des paramètres du premier appareil électroménager.

5. Dispositif de commande et d'affichage (2) pour un appareil électroménager (1) selon la revendication 4,
**caractérisé en ce que**
l'état du premier appareil électroménager (1) peut être affiché simultanément dans un champ d'affichage (7.2) séparé avec les champs d'affichage (7.3, 7.4) respectifs pour les appareils électroménagers (5.1, 5.2) distants.

6. Appareil électroménager (1), avec un dispositif de commande et d'affichage (2), comprenant un afficheur (3) avec plusieurs champs (7.1, 7.2, 7.3, 7.4) et un moyen de commande (4) pour la sélection de programmes de fonctionnement et/ou de paramètres et/ou d'options d'affichage, le dispositif de commande et d'affichage (2) étant adapté pour afficher des états et/ou des réglages d'autres appareils électroménagers (5.1, 5.2) en liaison de communication (6) avec l'appareil électroménager,
**caractérisé en ce que**
l'afficheur (3) comprend un champ (7.4) en tant que zone d'affichage, dans lequel des états et/ou des réglages des autres appareils électroménagers (5.1, 5.2) peuvent être affichés en tant qu'information résumée (11).

7. Système, composé d'un premier appareil électroménager (1) avec un dispositif de commande et d'affichage (2), comprenant un afficheur (3) avec plusieurs champs (7.1, 7.2, 7.3, 7.4) et un moyen de commande (4) pour la sélection de programmes de fonctionnement et/ou de paramètres et/ou d'options d'affichage, et d'autres appareils électroménagers (5.1, 5.2) en liaison de communication (6) avec le premier appareil électroménager (1), le dispositif de commande et d'affichage (2) étant adapté pour afficher des états et/ou des réglages des autres appareils électroménagers (5.1, 5.2) en liaison de communication (6) avec le premier appareil électroménager (1),
**caractérisé en ce que**
l'afficheur (3) comprend un champ (7.4) en tant que zone d'affichage, dans lequel des états et/ou des réglages des autres appareils électroménagers (5.1, 5.2) peuvent être affichés en tant qu'information résumée (11).
